# EUROPÄISCHE PATENTANMELDUNG

(11) **EP 1 598 979 A1**
(43) Veröffentlichungstag der Anmeldung: **23.11.2005**
(21) Anmeldenummer: 04011811.9
(22) Anmeldetag: 18.05.2004
(51) Int. Cl.: H04L 12/24, H04L 12/26

(54) **Verfahren und Einrichtungen zum Betreiben eines Managementnetzes bei Ausfall eines Managers**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines Managementnetzes mit einem Agenten (OMC1), sowie einem ersten Manager (NMC1) und einem zweiten Manager (NMC2). Der Agent (OMC1) sendet an den ersten Manager (NMC1) Ereignismeldungen (NOTIFY EVENT) gemäß der oder den Subskription(en) des ersten Managers (NMC1). Im Falle einer Störung der Kommunikation zwischen dem Agenten (OMC1) und dem ersten Manager (NMC1) oder einer Störung des ersten Managers (NMC1) sendet der Agent (OMC1) eine erste Nachricht (notifySubscriptionDisabled) mit Informationen über die Subskription(en) des ersten Managers (NMC1) an den zweiten Manager (NMC2). Schließlich sendet der Agent (OMC1) an den zweiten Manager (NMC2) Ereignismeldungen (NOTIFY EVENT) gemäß der(den) Subskription(en) des ersten Managers (NMC1). Weiterhin betrifft die Erfindung einen Agenten (OMC1) und einen Manager (NMC2) für ein Managementnetz zur Durchführung des Verfahrens.

## Beschreibung

Die Erfindung betrifft ein Verfahren zum Betreiben eines Managementnetzes, welches einen Agenten sowie einen ersten und einen zweiten Manager aufweist. Weiterhin betrifft die Erfindung einen Agenten und einen Manager für ein Managementnetz zur Durchführung des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte Requests versenden, die von Agenten ausgeführt werden, und erhalten entsprechende Rückmeldungen (Responses) von den Agenten. Einrichtungen bzw. Elemente des Telekommunikations-Netzes (Netz-Ressourcen), die in einer TMN-Hierarchie die Rolle eines Agenten ausüben, erkennen relevante Ereignisse (events, wie z.B. Alarme) im Netz, generieren entsprechende Mitteilungen (notifications) und übertragen sie in Form von Ereignismeldungen (Notify Events) an Manager, um ein effizientes Netzmanagement zu ermöglichen.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol nach ITU-T X.711) oder CORBA (Common Object Request Broker Architecture), und ein Objektmodell gekennzeichnet werden können.

Solche Schnittstellen gibt es beispielsweise zwischen einerseits der Netzwerkelementmanagementebene (Network Element Management Level) und andererseits der Netzwerkelementebene (Network Element Level). Ein Beispiel für Netzeinrichtungen dieser Manager-Agent-Schnittstelle stellen die Betriebs- und Wartungszentren (OMC: Operation and Maintenance Center) auf Seite der Netzwerkelementmanagementebene dar, sowie auf der Seite der Netzwerkelementebene Einrichtungen wie z.B. Basisstationen des Basisstationssystem (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 812.11-Standards.

Management-Schnittstellen bzw. Manager-Agent-Schnittstellen existieren auch zwischen einerseits der Netzwerkmanagementebene (Network Management Level) und andererseits der Netzwerkelementmanagementebene. Ein Beispiel für Netzeinrichtungen zu dieser Manager-Agent-Schnittstelle stellen die Netzwerkmanagementzentren (NMC: Network Management Center) auf der Seite der Netzwerkmanagementebene und die Betriebs- und Wartungszentren (OMC: Operation and Maintenance Center) auf der Seite der Netzwerkelementmanagementebene z.B. im genannten GSM oder einem anderen Mobilfunk-Netz dar.

In einer Multi-Manager-Umgebung müssen Agenten in der Lage sein, unter Umständen parallel laufende Anforderungen von mehreren Managern zu bearbeiten. Ein Manager kann seine Funktion nur dann optimal erfüllen, wenn alle relevanten Ereignismeldungen (Notify Events) von den untergeordneten Agenten empfangen werden. Unter Normalbedingungen, d.h. wenn die Kommunikation zwischen einem Agent und den übergeordneten Managern korrekt funktioniert, geschieht dies über einen sogenannten Event-Reporting-Mechanismus. Dessen Aufgabe ist es, nur diejenigen Ereignismeldungen zum Manager zu routen, welche bestimmten Filterkriterien genügen bzw. welche der oder den Subskriptionen des jeweiligen Managers entsprechen.

Ein Problem tritt dann auf, wenn ein Manager eines Managementnetzes ausfällt bzw. wenn die Kommunikation zwischen einem Agenten und einem Manager aus anderen Gründen gestört ist. Die der oder den Subskriptionen des Managers entsprechenden Ereignismeldungen können in diesem Fall nicht mehr von dem Agenten zu dem Manager übertragen werden. Werden diese Ereignismeldungen jedoch nicht von einem Manager bearbeitet, so kann das Managementnetz seine Überwachungsfunktion für das betroffene System nicht mehr optimal wahrnehmen.

Der Erfindung liegt die Aufgabe zugrunde, ein Verfahren zum Betreiben eines Managementnetzes aufzuzeigen, welches bei Ausfall eines Managers einen effizienten Ablauf des Netzwerkmanagements ermöglicht. Weiterhin sollen ein Agent und ein Manager zur Durchführung des Verfahrens aufgezeigt werden.

Diese Aufgabe wird durch ein Verfahren mit den Merkmalen des Patentanspruchs 1, sowie durch einen Agenten und einen Manager mit den Merkmalen von nebengeordneten Patentansprüchen gelöst.

Vorteilhafte Ausgestaltungen und Weiterbildungen sind Gegenstand von Unteransprüchen.

Beim erfindungsgemäßen Verfahren zum Betreiben eines Managementnetzes mit einem Agenten, sowie einem ersten und einem zweiten Manager sendet der Agent an den ersten Manager Ereignismeldungen gemäß einer Subskription des ersten Managers. Im Falle einer Störung der Kommunikation zwischen dem Agenten und dem ersten Manager oder einer Störung des ersten Managers sendet der Agent eine erste Nachricht mit Informationen über die Subskription des ersten Managers an den zweiten Manager. Der Agent sendet weiterhin an den zweiten Manager Ereignismeldungen gemäß der Subskription des ersten Managers.

Neben dem Agenten, dem ersten und dem zweiten Manager können weitere Managementnetzelemente Bestandteil des Managementnetzes sein. Funktionen des Managementnetzes können zum Beispiel im Fehlermanagement (fault-management) und/oder im Konfigurationsmanagement (configuration-management) und/oder im Sicherheitsmanagement (security-management) und/oder im Abbrechnungsmanagement (accounting-management) und/oder im Leistungsmanagement (performance-management) liegen.

Der Agent sendet, aufgrund des Eintretens bestimmter Ereignisse, Ereignismeldungen an Manager. Eine Subskription eines Managers definiert hierbei bestimmte Ereignismeldungen, welche der jeweilige Manager vom Agenten zu empfangen wünscht. Dies kann realisiert werden durch den Einsatz geeigneter Filterfunktionen im Agenten. Der Agent kann eine Störung entweder der Kommunikation zwischen dem Agenten und dem ersten Manager oder auch eine Störung des ersten Managers erkennen, wobei dieses Erkennen zum Beispiel durch das Eintreffen oder insbesondere durch das Ausbleiben bestimmter Nachrichten von dem ersten Manager an den Agenten hervorgerufen werden kann. Im Anschluss an das Erkennen der Störungen werden Ereignismeldungen gemäß der Subskription des ersten Managers an den zweiten Manager gesendet, so dass der zweite Manager befähigt wird, als Vertretung für den ersten Manager zu fungieren. Der zweite Manager kann insbesondere für die Übernahme der Aufgabe des ersten Managers im Voraus vorgesehen worden sein. Von Vorteil ist, dass die Befähigung des zweiten Managers zur Vertretung des ersten Managers ohne Operatoreinwirkung erfolgt, d.h. ohne dass Personal benötigt wird, welches auf den Ausfall des ersten Managers reagiert.

Das Verfahren kann in Bezug auf eine, eine Mehrzahl oder alle Subskriptionen des ersten Managers bei dem Agenten durchgeführt werden. Dies trifft auch auf die im folgenden beschriebenen Ausgestaltungen und Weiterbildungen zu.

In Weiterbildung der Erfindung empfängt der Agent nach der Versendung der ersten Nachricht von dem zweiten Manager eine zweite Nachricht zur Anforderung von Ereignismeldungen gemäß der Subskription des ersten Managers. Somit wird der Agent vom zweiten Manager auf den Empfang der ersten Nachricht hin direkt zur Versendung von Ereignismeldungen gemäß der Subskription des ersten Managers aufgefordert, so dass der Agent gegebenenfalls Einstellungen vornehmen kann, um die Versendung der Ereignismeldungen gemäß der Subskription des ersten Managers an den zweiten Manager zu ermöglichen.

Vorteilhaft ist es, wenn die erste Nachricht folgendes umfasst: Identifikationsinformationen des ersten Managers, Identifikationsinformationen der Subskription des ersten Managers, sowie Informationen über gemäß der Subskription des ersten Managers zu versendende Ereignismeldungen. Der letzte Punkt kann zum Beispiel durch eine Beschreibung eines von dem Agenten für die Subskription des ersten Managers verwendeten Filters realisiert werden.

In Weiterbildung der Erfindung sendet der Agent im Falle der Beendigung der Störung der Kommunikation zwischen dem Agenten und dem ersten Manager oder der Beendigung der Störung des ersten Managers eine dritte Nachricht zur Information über die Beendigung der Störung an den zweiten Manager. Weiterhin beendet der Agent die Versendung von Ereignismeldungen gemäß der Subskription des ersten Managers an den zweiten Manager, und nimmt die Versendung von Ereignismeldungen gemäß der Subskription des ersten Managers an den ersten Manager wieder auf. Vorteilhafter Weise empfängt der Agent nach der Versendung der dritten Nachricht von dem zweiten Manager eine vierte Nachricht zur Aufforderung zur Beendigung der Versendung von Ereignismeldungen gemäß der Subskription des ersten Managers. Ausgelöst durch diese direkte Aufforderung kann der Agent gegebenenfalls Einstellungen verändern, so dass als Resultat dieser Bearbeitung die Versendung der Ereignismeldungen gemäß der oder den Subskriptionen des ersten Managers an den zweiten Manager eingestellt werden kann. Die Beendigung der Störung kann von dem Agenten zum Beispiel durch das Ausbleiben oder Vorhandensein bestimmter Nachrichten, wie beispielsweise Kommunikations-Anforderung, von dem ersten Manager erkannt werden. Der Agent informiert daraufhin den zweiten Manager, welcher die Vertretungsfunktion für den ersten Manager aufgrund der an ihn gesendeten Ereignismeldungen wahrnehmen kann, woraufhin der zweite Manager den Agenten auffordern kann, die Versendung von Ereignismeldungen gemäß der oder den Subskriptionen des ersten Managers an ihn zu unterlassen.

In Ausgestaltung der Erfindung hat der Agent vor Eintritt der Störung Identifikationsinformationen des zweiten Managers als dem ersten Manager in Bezug auf Störungen zugeordneter Manager gespeichert. So kann ein Agent zum Beispiel eine Tabelle gespeichert haben, welche eine Zuordnung von jeweils zwei Managern zueinander beinhaltet. Jedem Manager, welchem der Agent Ereignismeldungen sendet, kann auf diese Weise ein Back-up- oder Ersatz- bzw. Vertretungsmanager zugeordnet sein.

Der erfindungsgemäße Agent für ein Managementnetz weist Mittel zum Senden von Ereignismeldungen an einen ersten Manager gemäß einer Subskription des ersten Managers auf, sowie Mittel zum Feststellen einer Störung der Kommunikation zwischen dem Agenten und dem ersten Manager oder einer Störung des ersten Managers, und Mittel zum Versenden einer Nachricht mit Informationen über die Subskription des ersten Managers an einen zweiten Manager im Fall einer Störung.

Der erfindungsgemäße Manager für ein Managementnetz weist Mittel zum Empfangen einer Nachricht von einem Agent mit Informationen über eine Subskription eines anderen Managers auf, sowie Mittel zum Empfangen von Ereignismeldungen gemäß der Subskription des anderen Managers von dem Agenten.

Sowohl der erfindungsgemäße Agent als auch der erfindungsgemäße Manager eignen sich insbesondere zur Durchführung des erfindungsgemäßen Verfahrens, wobei dies auch auf die Ausgestaltung und Weiterbildung zutrifft. Hierzu können sie weitere geeignete Mittel aufweisen.

Im folgenden wird die Erfindung anhand eines Ausführungsbeispiels näher erläutert. Dabei zeigen:
- Figur 1:: einen Ausschnitt aus einem Managementnetz,
- Figur 2:: ein Ablaufdiagramm des erfindungsgemäßen Verfahrens,
- Figur 3:: schematisch den Aufbau eines erfindungsgemäßen Agenten,
- Figur 4:: schematisch den Aufbau eines erfindungsgemäßen Managers.

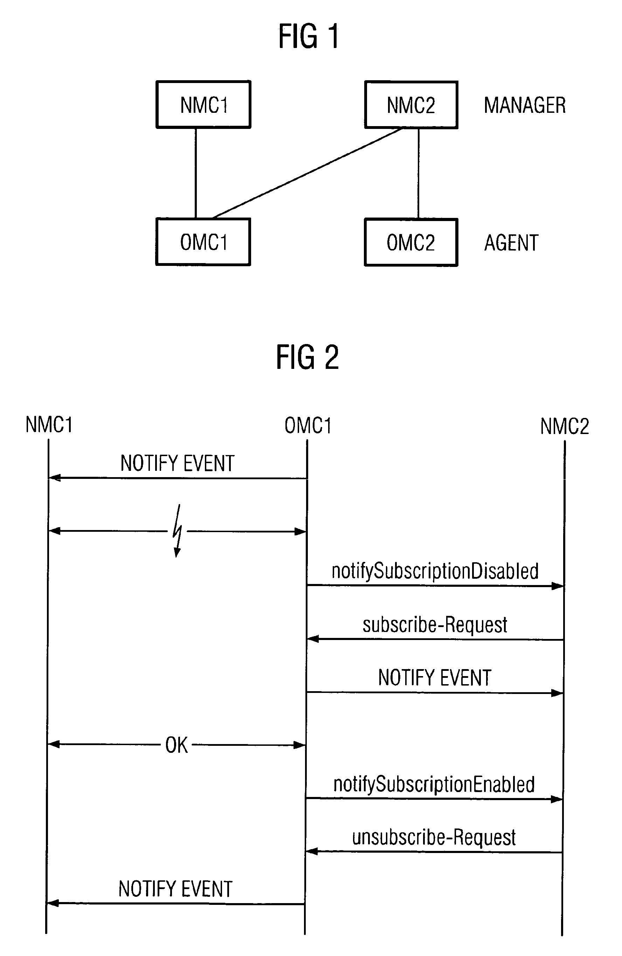

Figur 1 zeigt einen Ausschnitt aus einem Managementnetz eines Telekommunikationssystems wie beispielsweise eines Mobilfunkkommunikationssystems. Die Netzwerkmanagementschicht MANAGER als die obere der beiden dargestellten Schichten besteht aus den beiden Managern NMC1 und NMC2 (NMC: Network Management Center). Die Netzelementmanagementschicht AGENT als die untere der beiden dargestellten Schichten besteht aus den beiden Agenten OMC1 und OMC2 (OMC: Operation and Maintenance Center). Die Erfindung wird im folgenden anhand der in Figur 1 dargestellten Schnittstelle zwischen der Netzwerkmanagementschicht und der Netzwerkelementmanagementschicht erläutert.

Sie ist jedoch auf beliebige andere Manager-Agent-Schnittstellen anwendbar, so z.B. auf die Schnittstelle zwischen der Netzelementmanagementschicht und der in Figur 1 nicht dargestellten tieferliegenden Netzwerkelementschicht. Das Managementnetz kann eine Vielzahl an weiteren Managern und Agenten beinhalten, deren Vorhandensein für das Verständnis der Erfindung jedoch nicht relevant ist.

Die Manager NMC1 und NMC2 haben bei den Agenten OMC1 und OMC2 die für sie relevanten Ereignismeldungen "abonniert" bzw. sind für diese subskribiert. Dies bedeutet, dass der jeweilige Manager eine Anforderung an den jeweiligen Agenten gesendet hat, welche die Erzeugung eines Filtermechanismus zur Folge hat. Ein Filtermechanismus bewirkt, dass aus der Vielzahl an Ereignismeldungen nur diejenigen einen Manager erreichen, welche der oder den Subskriptionen dieses Managers entsprechen, so dass ein Manager den vom Agenten stammenden Informationsfluss nach seinen individuellen Anforderungen steuern kann. Ein solcher Filter kann beispielsweise bei einer CORBA-basierten Management-Schnittstelle mit Hilfe des sogenannten "Notification Service" gemäß OMG "Notification Service Specification V1.0.1" (OMG: Object Management Group), oder bei einer CMIP-basierten Management-Schnittstelle mit Hilfe von "Event Forwarding Discriminators" gemäß ITU-T X.734 "Systems Management: Notify Event Management Function" erzeugt werden.

Die in Figur 1 dargestellte Schnittstelle zwischen Netzwerkmanagementschicht und Netzwerkelementmanagementschicht ist ein Beispiel für eine Multi-Manager-Konfiguration. Mehrere NMC's können an ein OMC angeschlossen sein, wobei jedes NMC eine spezifische Management-Aufgabe übernimmt. In Figur 1 ist -jeweils durch eine Linie zwischen den Elementen des Managementnetzes symbolisiert- der Manager NMC1 an den Agenten OMC1 angeschlossen, während der Manager NMC2 an die beiden Agenten OMC1 und OMC2 angeschlossen ist. Dies bedeutet, dass der Manager NMC1 Ereignismeldungen von dem Agent OMC1 empfängt, und der Manager NMC2 von den beiden Agenten OMC1 und OMC2. Da mehrere Manager NMC1 und NMC2 existieren, müssen die beiden Manager NMC1 und NMC2 in der Regel jeweils nur eine Untermenge der von den Agenten OMC1 und OMC2 erzeugten Ereignismeldungen auswerten, so dass für die Kommunikation zwischen den Agenten OMC1 und OMC2 und den Managern NMC1 und NMC2 entsprechende Filter eingerichtet sind.

Für diesen Zweck definiert das 3GPP-Standard TS 32.302 ("Notification Integration Reference Point (IRP): Information Service") einen sogenannten Subscribe-Mechanismus, mit welchem ein Manager einem Agenten genaue Angaben über die Art und die Parameterwerte der für ihn relevanten Notifications mitteilen kann. Der Subscribe-Mechanismus kann unabhängig von dem für die Kommunikation zwischen Manager und Agent verwendeten Kommunikationsprotokoll eingesetzt werden. Zur Initiierung der Subskription sendet ein Manager an einen Agenten eine Subscribe-Anforderung mit seinen Identifikationsinformationen, der sogenannten "managerReference". Der Agent antwortet darauf mit Identifikationsinformationen der Subskription, dem sogenannten "subscriptionId"-Wert, welcher für die weiteren Manager-Operationen bezüglich dieser Subskription verwendet werden muss. Ein Manager kann mehrmals Subscribe-Anforderungen an einen Agenten senden, z.B. für verschiedene Arten von Ereignismeldungen, woraufhin der Agent bei jeder Subscribe-Anforderung einen neuen eindeutigen "subscriptionId"-Wert vergibt.

Im Anschluss an den Empfang der Identifikationsinformationen der Subskription kann der Manager durch Versendung von geeigneten im folgenden aufgeführten Nachrichten unter Bezugnahme auf den "subscriptionId"-Wert verschiedene Operationen in Bezug auf diese Subskription veranlassen:
"unsubscribe": Der Agent beendet daraufhin anhand der "managerReference"-Kennung die vorhandene Subskription. "getSubscriptionIds": Hiermit werden vom Manager anhand der "managerReference"-Kennung alle an ihn vom Agenten vergebenen "subscriptionId"-Werte angefordert.
"getSubscriptionStatus": Der Manager empfängt daraufhin in Bezug auf die jeweilige Subskription Informationen über die Art von Ereignismeldungen und den aktuellen Filter. "changeSubscriptionFilter": Der Manager kann die Filterstruktur der Subskription ändern.
"suspendSubscription": Eine Subskription wird zeitweise ausgesetzt, d.h. der Manager empfängt zeitweilig keine Ereignismeldungen gemäß dieser Subskription.
"resumeSubscription": Eine zuvor ausgesetzte Subskription wird wieder aktiviert, d.h. der Manager empfängt erneut Ereignismeldungen gemäß dieser Subskription.

Die beschriebenen Manager-Anforderungen beinhalten jeweils Identifikationsinformationen der Subskription, d.h. den "subscriptionId"-Wert, und Identifikationsinformationen des Managers, d.h. die "managerReference"-Kennung. Somit können die beschriebenen Operationen nur von dem Manager, welcher die Subskription initiiert hat und somit auch den "subscriptionId"-Wert kennt, veranlasst werden.

Im folgenden wird der Fall betrachtet, dass der Manager NMC1 seine Überwachungsfunktion zeitweilig nicht wahrnehmen kann, so dass die Kommunikation zwischen dem Manager NMC1 und dem Agenten OMC1 gestört ist. Dies kann bedingt sein durch den Ausfall des Managers NMC1 an sich oder durch einen Ausfall der Kommunikation zwischen dem Manager NMC1 und dem Agenten OMC1. Gemäß dem Stand der Technik kann in diesem Fall das Personal des Managers NMC1 z.B. telefonisch das Personal eines anderen Managers kontaktieren. Die für die Subskriptionen des Managers NMC1 relevanten Informationen werden dem Personal des anderen Managers mitgeteilt, so dass der andere Manager durch entsprechende Eingaben des Personals dazu gebracht werden kann, den ausgefallenen Manager NMC1 zu vertreten. Dieses Vorgehen hat den Nachteil, dass durch die aufwendige Informationsübermittlung Zeit verloren geht, während welcher u.U. eine Vielzahl an Ereignismeldungen gemäß der Subskription des Managers NMC1 nicht bearbeitet werden. Außerdem ist die Gegenwart von Personal vor Ort des Managers NMC1 und eines anderen Managers nötig, um einen zeitweiligen Ersatz für den ausgefallenen Manager NMC1 realisieren zu können.

Erfindungsgemäß hat der Agent OMC1 für den Fall des Ausfalls des Managers NMC1 Identifikationsinformationen des Managers NMC2 gespeichert, welcher während der Störung der Kommunikation zwischen dem Manager NMC1 und dem Agenten OMC1 die Managerfunktion des Managers NMC1 in Vertretung für diesen ausführen soll. Der Manager NMC2 fungiert somit als "back-up-Manager" in Bezug auf den Manager NMC1. Sendet ein Agent Ereignismeldungen an eine Mehrzahl von Managern, so weist er eine Tabelle auf, in welcher jedem dieser Manager ein back-up-Manager zugeordnet ist. Die Speicherung erfolgt vorzugsweise über eine vom Operator des Managementnetzes konfigurierbare Datei, so dass der einem Manager zugeordnete back-up-Manager verändert werden kann. Ein Manager kann mehreren anderen Managern als back-up-Manager zugeordnet sein. Auch können verschiedene Agenten in Bezug auf einen Manager verschiedene back-up-Manager gespeichert haben.

Figur 2 zeigt den Ablauf des erfindungsgemäßen Verfahrens. Der Manager NMC1 hat bei dem Agenten OMC1 eine Subskription initiiert und empfängt gemäß dieser Subskription Ereignismeldungen NOTIFY EVENT. Der Agent OMC1 stellt unter Verwendung von an sich bekannten Verfahren fest, dass die Kommunikation zwischen dem Agenten OMC1 und dem Manager NMC1 gestört ist, durch einen durch einen Blitz unterbrochenen Doppelpfeil symbolisiert. Automatisch, d.h. ohne hierzu aufgefordert zu werden, versendet der Agent OMC1 nach Feststellung der Störung eine Nachricht notifySubscriptionDisabled an den Manager NMC2, dessen "managerReference"-Kennung er als back-up-Manager für den Manager NMC1 gespeichert hat. Die Nachricht notifySubscriptionDisabled enthält folgende Informationen:
die "managerReference"-Kennung des Managers NMC1,
den "subscriptionId"-Wert als eindeutige Identifikationsinformation der Subskription des Managers NMC1,
einen Parameter "notificationCategorySet", welcher angibt, welche Arten von Ereignismeldungen NOTIFY EVENT der Manager NMC1 gemäß seiner Subskription empfangen sollte,
eine Größe "filter", welche die Filterstruktur für die mit dem Parameter "notificationCategorySet" verknüpften Ereignismeldungen NOTIFY EVENT definiert,
eine Größe "subscriptionState", welche angibt, ob die Subskription aktuell vom Manager NMC1 ausgesetzt (suspended) war oder verwendet wurde (running).
Existieren mehrere Subskriptionen des Managers NMC1 beim Agenten OMC1, so werden in der Nachricht notifySubscriptionDisabled der "subscriptionId"-Wert, "notificationCategorySet", "filter", und "subscriptionState" für jede der Subskriptionen mitgeteilt.

Nach Empfang der Nachricht notifySubscriptionDisabled sendet der Manager NMC2 an den Agenten OMC1 eine Nachricht subscribe-Request, welche den Agenten OMC1 auffordert, alle aktuell nicht ausgesetzten Subskriptionen des Managers NMC1 für den Manager NMC2 einzurichten. Die Nachricht subscribe-Request kann alle existierenden Subskriptionen des Managers NMC1 betreffen. Es ist jedoch auch möglich, dass pro Subskription eine eigene Nachricht subscribe-Request versendet wird. Die Nachricht subscribe-Request enthält die Größen "managerReference" des Managers NMC2, "notificationCategorySet" und "filter" für die jeweiligen Subskriptionen. Somit wird sichergestellt, dass für das Netzmanagement relevante Notifications nicht verloren gehen. Vielmehr werden die Ereignismeldungen NOTIFY EVENT gemäß der oder den Subskriptionen des Managers NMC1 von dem Agenten OMC1 an den Manager NMC2 gesendet. Daher kann der Manager NMC2 die Aufgaben des ausgefallenen Managers NMC1 übernehmen.

Ist die Störung der Kommunikation zwischen dem Agent OMC1 und dem Manager NMC1 beendet, in Figur 2 durch einen durch ein "OK" unterbrochenen Doppelpfeil symbolisiert, sendet der Agent OMC1 unaufgefordert eine Nachricht notifySubscriptionEnabled unter Bezugnahme auf die Identifikationsinformationen des Managers NMC1 an den Manager NMC2, mit welcher dem Manager NMC2 mitgeteilt wird, dass der von ihm vertretene Manager NMC1 wieder betriebsbereit ist. Im Anschluss sendet der Manager NMC2 eine Nachricht unsubscribe-Request an den Agent OMC1, umfassend die "managerReference" des Managers NMC2, sowie "notificationCategorySet" und "filter" für die jeweiligen Subskriptionen. Wie auch bei der Nachricht subscribe-Request kann eine einzige Nachricht unsubscribe-Request oder eine eigene Nachricht unsubscribe-Request für jede Subskription des Managers NMC1 verwendet werden.

Im folgenden werden Ereignismeldungen NOTIFY EVENT des Agenten OMC1 gemäß der Subskription des Managers NMC1 wieder an den Manager NMC1 gesendet.

Von Vorteil bei dem beschriebenen Verfahren ist, dass der Manager NMC2 automatisch, d.h. insbesondere ohne Erfordernis eines menschlichen Eingriffs, die Aufgaben des inaktiven Managers NMC1 übernehmen kann. Das beschriebene Verfahren ist auf verschiedenartigste Telekommunikationsnetze anwendbar. Es ist unabhängig vom für die Manager-Agent-Schnittstelle eingesetzten Kommunikationsprotokoll.

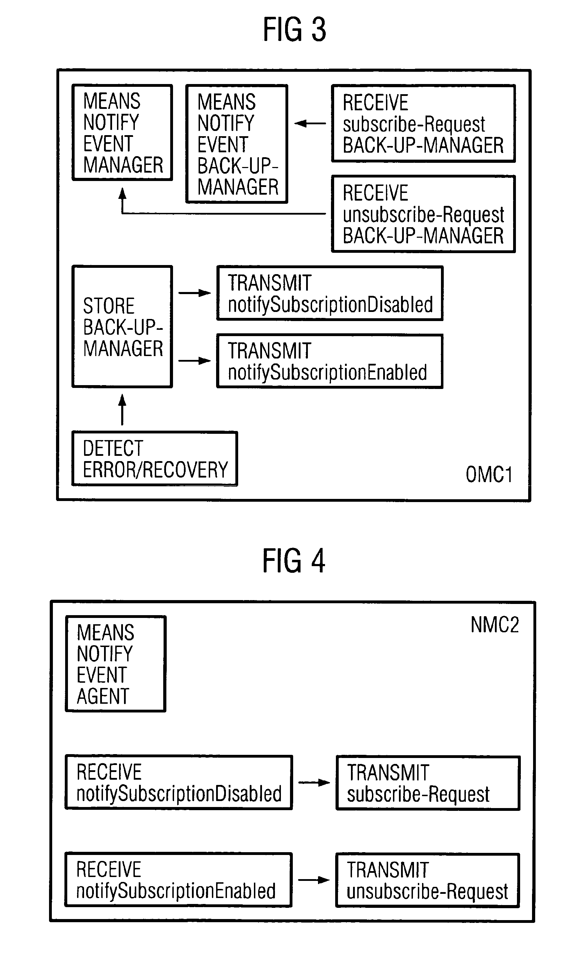

Figur 3 zeigt schematisch den Aufbau des Agenten OMC1. Dieser weist die Mittel MEANS NOTIFY EVENT MANAGER und MEANS NOTIFY EVENT BACK-UP-MANAGER zur Versendung von Ereignismeldungen an einen Manager bzw. an einen back-up-Manager gemäß einer Subskription des Managers auf. Mit den Mitteln DETECT ERROR/RECOVERY kann der Agent OMC1 feststellen, dass eine Störung der Kommunikation zwischen dem Agenten OMC1 und einem Manager aufgetreten beziehungsweise behoben ist. Ausgelöst durch die Feststellung einer Störung wird unter Verwendung der Mittel TRANSMIT notifySubscriptionDisabled eine oben beschriebene notifySubscriptionDisabled Nachricht erstellt und an einen back-up-Manager, dessen Identifikationsinformationen im Speicher STORE BACK-UP-MANAGER abgelegt ist, gesendet. Stellt der Agent OMC1 mit den Mitteln DETECT ERROR/RECOVERY fest, dass eine zuvor gestörte Kommunikation zwischen dem Agenten OMC1 und einem Manager wieder störungsfrei ist, so wird unter Verwendung der Mittel TRANSMIT notifySubscriptionEnabled eine oben beschriebene notifySubscriptionEnabled Nachricht erstellt und an den back-up-Manager, dessen Identifikationsinformationen im Speicher STORE BACK-UP-MANAGER abgelegt ist, gesendet. Der Empfang einer oben erläuterten Nachricht subscribe-Request von dem back-up-Manager mit den Mitteln RECEIVE subscribe-Request BACK-UP-MANAGER steuert die Mittel MEANS NOTIFY EVENT BACK-UP-MANAGER zur Versendung von Ereignismeldungen an den back-up-Manager gemäß der Subskription des Managers an, während der Empfang einer oben erläuterten Nachricht unsubscribe-Request von dem back-up-Manager mit den Mitteln RECEIVE unsubscribe-Request BACK-UP-MANAGER die Mittel MEANS NOTIFY EVENT BACK-UP-MANAGER dazu veranlasst, Ereignismeldungen gemäß der Subskription des Managers nicht mehr an den back-up-Manager, sondern an den Manager zu senden.

Der Aufbau des Managers NMC2 ist schematisch in Figur 4 dargestellt. Mit den Mitteln MEANS NOTIFY EVENT AGENT empfängt und verarbeitet der Manager NMC2 von Agenten empfangene Ereignismeldungen. Ausgelöst durch den Empfang einer oben erläuterten Nachricht notifySubscriptionDisabled mit den Mitteln RECEIVE notifySubscriptionDisabled wird mit den Mitteln TRANSMIT subscribe-Request eine oben beschriebene Nachricht subscribe-Request erstellt und an den Agenten, von dem die Nachricht notifySubscriptionDisabled empfangen wurde, gesendet. Ausgelöst durch den Empfang einer oben erläuterten Nachricht notifySubscriptionEnabled mit den Mitteln RECEIVE notifySubscriptionEnabled wird mit den Mitteln TRANSMIT unsubscribe-Request eine oben beschriebene Nachricht unsubscribe-Request erstellt und an den Agenten, von dem die Nachricht notifySubscriptionDisabled empfangen wurde, gesendet.

## Patentansprüche

1. Verfahren zum Betreiben eines Managementnetzes mit einem Agenten (OMC1), sowie einem ersten Manager (NMC1) und einem zweiten Manager (NMC2), bei dem der Agent (OMC1)
- an den ersten Manager (NMC1) Ereignismeldungen (NOTIFY EVENT) gemäß einer Subskription des ersten Managers (NMC1) sendet,
- im Falle einer Störung der Kommunikation zwischen dem Agenten (OMC1) und dem ersten Manager (NMC1) oder einer Störung des ersten Managers (NMC1) eine erste Nachricht (notifySubscriptionDisabled) mit Informationen über die Subskription des ersten Managers (NMC1) an den zweiten Manager (NMC2) sendet, und
- an den zweiten Manager (NMC2) Ereignismeldungen (NOTIFY EVENT) gemäß der Subskription des ersten Managers (NMC1) sendet.

2. Verfahren nach Anspruch 1, bei dem
der Agent (OMC1) nach der Versendung der ersten Nachricht (notifySubscriptionDisabled) von dem zweiten Manager (NMC2) eine zweite Nachricht (subscribe-Request) zur Anforderung von Ereignismeldungen (NOTIFY EVENT) gemäß der Subskription des ersten Managers (NMC1) empfängt.

3. Verfahren nach Anspruch 1 oder 2, bei dem die erste Nachricht (notifySubscriptionDisabled) umfasst:
- Identifikationsinformationen des ersten Managers (NMC1),
- Identifikationsinformationen der Subskription des ersten Managers (NMC1), und
- Informationen über gemäß der Subskription des ersten Managers (NMC1) zu versendende Ereignismeldungen (NOTIFY EVENT).

4. Verfahren nach einem der Ansprüche 1 bis 3, bei dem
der Agent (OMC1) im Falle der Beendigung der Störung der Kommunikation zwischen dem Agenten (OMC1) und dem ersten Manager (NMC1) oder der Beendigung der Störung des ersten Managers (NMC1)
- eine dritte Nachricht (notifySubscriptionEnabled) zur Information über die Beendigung der Störung an den zweiten Manager (NMC2) sendet,
- die Versendung von Ereignismeldungen (NOTIFY EVENT) gemäß der Subskription des ersten Managers (NMC1) an den zweiten Manager (NMC2) beendet, und
- die Versendung von Ereignismeldungen (NOTIFY EVENT) gemäß der Subskription des ersten Managers (NMC1) an den ersten Manager (NMC1) wiederaufnimmt.

5. Verfahren nach Anspruch 4, bei dem
der Agent (OMC1) nach der Versendung der dritten Nachricht (notifySubscriptionEnabled) von dem zweiten Manager (NMC2) eine vierte Nachricht (unsubscribe-Request) zur Aufforderung zur Beendigung der Versendung von Ereignismeldungen (NOTIFY EVENT) gemäß der Subskription des ersten Managers (NMC1) empfängt.

6. Verfahren nach einem der Ansprüche 1 bis 5, bei dem
der Agent (OMC1) vor Eintritt der Störung Identifikationsinformationen des zweiten Managers (NMC2) als dem ersten Manager (NMC1) in Bezug auf Störungen zugeordneter Manager gespeichert hat.

7. Agent (OMC1) für ein Managementnetz, mit
- Mitteln (MEANS NOTIFY EVENT MANAGER) zum Senden von Ereignismeldungen (NOTIFY EVENT) an einen ersten Manager (NMC1) gemäß einer Subskription des ersten Managers (NMC1),
- Mitteln (DETECT ERROR/RECOVERY) zum Feststellen einer Störung der Kommunikation zwischen dem Agenten (OMC1) und dem ersten Manager (NMC1) oder einer Störung des ersten Managers (NMC1),
- Mitteln(TRANSMIT notifySubscriptionDisabled) zum Versenden einer Nachricht (notifySubscriptionDisabled) mit Informationen über die Subskription des ersten Managers (NMC1) an einen zweiten Manager (NMC2) im Falle einer Störung.

8. Agent (OMC1) nach Anspruch 7 mit
- Mitteln (DETECT ERROR/RECOVERY) zum Feststellen der Beendigung einer Störung der Kommunikation zwischen dem Agenten (OMC1) und dem ersten Manager (NMC1) oder einer Störung des ersten Managers (NMC1),
- Mitteln(TRANSMIT notifySubscriptionEnabled) zum Versenden einer Nachricht (notifySubscriptionEnabled) zur Information über die Beendigung einer Störung an den zweiten Manager (NMC2) im Falle der Beendigung einer Störung.

9. Manager (NMC2) für ein Managementnetz, mit
- Mitteln (RECEIVE notifySubscriptionDisabled) zum Empfangen einer Nachricht (notifySubscriptionDisabled) von einem Agenten (OMC1) mit Informationen über eine Subskription eines anderen Managers (NMC1),
- Mitteln (MEANS NOTIFY EVENT AGENT) zum Empfangen von Ereignismeldungen (NOTIFY EVENT) gemäß der Subskription des anderen Managers (NMC1) von dem Agenten (OMC1).
